Europäisches Patentamt

European Patent Office

Office européen des brevets

(11) Veröffentlichungsnummer: **0 279 335 B1**

(12) **EUROPÄISCHE PATENTSCHRIFT**

(45) Veröffentlichungstag der Patentschrift: **19.08.92**

(21) Anmeldenummer: **88101914.5**

(22) Anmeldetag: **10.02.88**

(51) Int. Cl.⁵: **H02M 3/335**, H02M 7/12, H04N 5/63

(54) **Schaltnetzteil.**

(30) Priorität: **20.02.87 DE 3705392**

(43) Veröffentlichungstag der Anmeldung:
**24.08.88 Patentblatt 88/34**

(45) Bekanntmachung des Hinweises auf die
Patenterteilung:
**19.08.92 Patentblatt 92/34**

(84) Benannte Vertragsstaaten:
**AT BE CH DE ES FR GB GR IT LI LU NL SE**

(56) Entgegenhaltungen:

**BAUTEILE REPORT vol. 13, no. 5, November
1975, Seite 150 - 151; "Einfaches Schaltnezteil für kleine Leistungen ohne Umschalten der Netzspannung von 110 bis 220 V"**

(73) Patentinhaber: **Deutsche Thomson-Brandt
GmbH
Postfach 2060
W-7730 Villingen-Schwenningen(DE)**

(72) Erfinder: **Rilly, Gerard, Dr.-Ing.
Panoramaweg 6
W-7731 Unterkirnach(DE)**
Erfinder: **Rodriguez, José, Dipl.-Ing.
Brendweg 16
W-7730 VS-Villingen(DE)**
Erfinder: **Malota, Bernhard, Dipl.-Ing.
Hansjakobweg 5
W-7733 Mönchweiler(DE)**

## Beschreibung

In Geräten der Nachrichtentechnik, wie z.B. einem Fernsehempfänger oder einem Videorecorder, werden überwiegend Schaltnetzteile (SMPS) für die Erzeugung der Betriebsspannungen verwendet. Ein Schaltnetzteil enthält auf der Primärseite eine Primärwicklung, an die die aus den Netz gewonnene Gleichspannung über einen periodisch betätigten Schalter in Form eines Schalttransistors angelegt ist. Der Schalter wird durch die selbstschwingend ausgebildete Schaltung auf der Primärseite oder durch eine getrennte Schaltung periodisch so betätigt, daß in der Primärwicklung jeweils während der Flußphase oder Hinlaufzeit ein sägezahnförmig ansteigender Strom fließt, der während der Sperrphase oder Rücklaufzeit unterbrochen wird. Während der Rücklaufzeit wird die im Transformator gespeicherte Energie auf die Sekundärseite übertragen und liefert dort über Gleichrichter und Ladekondensatoren die Betriebsspannungen.

Am Ende der Hinlaufzeit, also zu Beginn der Rücklaufzeit, wird der sägezahnförmig angestiegene Strom unterbrochen. Durch diese plötzliche Stromunterbrechung und das dadurch bewirkte hohe di/dt sowie durch die Streuinduktivitäten des Transformators entsteht zu Beginn der Rücklaufzeit an der Primärwicklung und somit auch an dem Schalter eine hohe Spannungspitze, die über den stationären Spannungswert während der Rücklaufzeit beträchtlich hinausgeht. Durch diese hohe Spannungspitze in der Größenordnung von 1.000 V wird der Schalttransistor gefährdet. Es ist daher notwendig, Maßnahmen zur Verringerung dieser Spannungspitze vorzusehen.

Es ist bekannt, eine mit einem Gleichrichter belastete Hilfswicklung des Transformators so fest mit der Primärwicklung zu koppeln, daß das Maximum des Ladestromes dieses Gleichrichters bei oder in der Nähe der Spannungsspitze liegt. Dadurch wird bereits zu Beginn der Rücklaufzeit eine Belastung des Transformators erreicht, die die Spannungsspitze verringert. Derartige Lösungen sind nur bedingt anwendbar, weil die Streuinduktivität abhängig von der Konstruktion des Transformators nicht beliebig verändert werden kann.

Es ist bekannt, parallel zur Primärwicklung des Transformators die Reihenschaltung aus einem Kondensator und aus der Parallelschaltung einer Diode mit einem Widerstand zu schalten (siehe Bauteile Report Vol. 13, N° 5, November 1975, S 150-151). Der zu Beginn der Rücklaufzeit jeweils über den Widerstand entladene Kondensator bildet in erwünschter Weise eine Belastung der Wicklung, verlangsamt damit den Spannungsanstieg und verringert die Spannungsspitze zu Beginn der Rücklaufzeit.

Der Erfindung liegt die Aufgabe zugrunde, ein Schaltnetzteil mit einer derartigen Reihenschaltung an der Primärwicklung so weiterzubilden, daß eine verbesserte Reduzierung der Spannungspitze auftritt und ein höherer Gesamtwirkungsgrad der Schaltung erzielt wird.

Diese Aufgabe wird durch die im Anspruch 1 beschriebene Erfindung gelöst. Vorteilhafte Weiterbildungen der Erfindung sind in den Unteransprüchen beschrieben.

Die Erfindung beruht auf folgenden Erkenntnissen und Überlegungen. An sich wird allgemein angenommen, daß eine Schaltungsmaßnahme an verschiedenen Wicklungen eines Transformators gleich wirkt, weil die Wicklungen magnetisch miteinander verkoppelt sind. Es hat sich jedoch gezeigt, daß die zusätzliche Reihenschaltung parallel zu einer Sekundärwicklung gegenüber der Schaltung mit der Reihenschaltung nur an der Primärwicklung eine beträchtliche Verbesserung hinsichtlich der Reduzierung der Spannungsspitze bringt. Das ist dadurch zu erklären, daß die Primärwicklung und die Sekundärwicklung nicht ideal miteinander verkoppelt sind, sondern zwischen diesen Wicklungen eine Streuinduktivität wirksam ist, und daß dadurch diese Wicklungen für den vorliegenden Fall nicht als gleichwertig anzusehen sind. Dadurch ist es von Vorteil, wenn die Primärwicklung und die Sekundärwicklung beide unabhängig voneinander mit der beschriebenen Reihenschaltung belastet sind. Vorteilhaft dabei ist, daß auch durch die Streuinduktivität der Sekundärwicklung zu Beginn der Rücklaufzeit bereits ein Strom fließt. Die Sekundärwicklung ist zwar durch einen Gleichrichter und einen Ladekondensator zur Erzeugung einer Betriebsspannung ebenfalls belastet, wodurch auch ein Strom während der Rücklaufzeit fließt. Dieser Strom kann jedoch erst dann fließen, wenn die Spannung an der Sekundärwicklung die Spannung an dem Ladekondensator übersteigt. Da die Spannung am Ladekondensator jedoch während der Hinlaufzeit nur geringfügig abfällt, fließt der Belastungsstrom durch diese Gleichrichterschaltung relativ zur Spannungsspitze zu spät und ist daher nicht in der Lage, eine Dämpfung der Spannungsspitze zu bewirken. Die erfindungsgemäße Schaltung hingegen bewirkt durch den jeweils zu Beginn der Rücklaufzeit entladenen Kondensator schon unmittelbar nach Beginn der Rücklaufzeit einen Strom, der auch die Streuinduktivität der Sekundärwicklung durchfließt und eine zusätzliche vorteilhafte Dämpfung der Spannungsspitze am Transformator bewirkt.

Die an der Sekundärwicklung vorgesehene Reihenschaltung kann grundsätzlich als passive Schaltung mit den genannten Bauteilen realisiert sein. Dabei entsteht durch die Entladung des Kondensators über dem parallel zur Diode liegenden Widerstand zwangsläufig eine Verlustleistung, die den Gesamtwirkungsgrad der Schaltung verringert. Diese Verlustleistung wird durch eine Weiterbildung der Erfindung verringert, die insbesondere für hohe Leistungen in der Größenordnung von 300 bis 400 Watt vorteilhaft ist. Gemäß dieser Weiterbildung ist die Schaltung als aktive Schaltung ausgebildet, indem der zur Entladung des Kondensators dienende Widerstand als Transistor ausgebildet ist. Dabei liegt parallel zur Diode die Reihenschaltung der Kollektor/Emitter-Strecke des Transistors mit einer Induktivität. Der Entladestrom des Kondensators fließt über die Induktivität. Diese wirkt zusammen mit einer zweiten Diode nach dem Prinzip der Energierückgewinnung so, daß die in dem Kondensator gespeicherte Energie zurückgewonnen und zur zusätzlichen Erzeugung einer Betriebsspannung ausgenutzt werden kann. Die in dem Kondensator notwendigerweise durch seine Aufladung gespeicherte Energie wird also positiv in die Energiebilanz der gesamten Schaltung zurückgeführt. Dadurch wird der Wirkungsgrad verbessert und der Aufwand and Kühlmitteln für die Bauteile verringert.

Die erfindungsgemäße Lösung ist auch bei einer Zeilenendstufe für einen Fernsehempfänger anwendbar, weil eine Zeilenendstufe in ihrer Funktion einem Schaltnetzteil ähnlich ist. Die erfindungsgemäße Schaltung kann auch parallel zu mehreren Primär- und Sekundärwicklungen vorgesehen sein.

Die Erfindung wird im folgenden anhand der Zeichnung an mehreren Ausführungsbeispielen erläutert. Darin zeigen:

Figur 1    ein Ausführungsbeispiel, bei dem die erfindungsgemäße Schaltung als passive Schaltung ausgebildet ist,

Figur 2    ein Ausführungsbeispiel mit aktiver Schaltung und Energierückgewinnung,

Figur 3    ein Ausführungsbeispiel mit aktiver Schaltung Schaltung auf der Primärseite und

Figur 4    Kurven zur Erläuterung der Wirkungsweise der erfindungsgemäßen Schaltung.

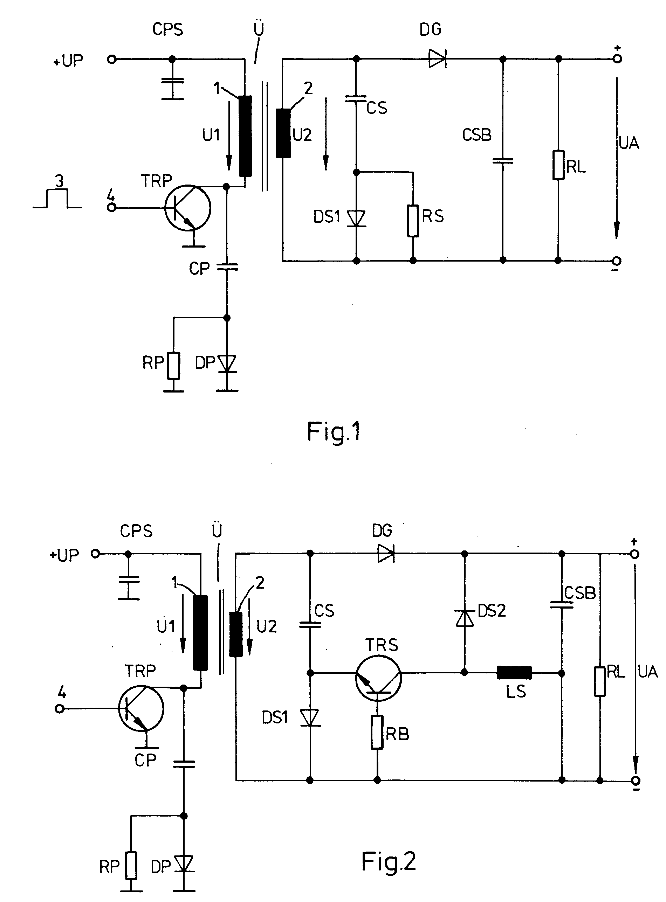

Figur 1 zeigt in vereinfachter Form ein Schaltnetzteil, bei dem eine Gleichspannung UP an die Reihenschaltung der Primärwicklung 1 des Transformators Ü mit dem Schalttransistor TRP angelegt ist. Der Schalttransistor TRP wird an der Klemme 4 durch eine Schaltspannung 3 periodisch, z.B. mit einer Frequenz von 20 - 60 kHz, leitend gesteuert und gesperrt. Die Sekundärwicklung 2 liefert über den Gleichrichter DG an dem Ladekondensator CSB und dm Lastwiderstand RL eine Betriebsgleichspannung UA. Zur Verringerung der Spannungsspitze, die beim Abschalten des Schalttransistors TRP am Transformator Ü und somit auch am Kollektor des Transistors TRP auftritt, ist an die Primärwicklung 1 die Reihenschaltung aus CP, DP, RP angeschlossen. Zusätzlich liegt parallel zur Sekundärwicklung 2 die Reihenschaltung aus dem Kondensator CS und aus der Parallelschaltung der Diode DS1 mit dem Widerstand RS.

In Figur 2 ist der Widerstand RS gemäß Figur 1 gebildet durch die Reihenschaltung der Kollektor/Emitter-Strecke des Transistors TRS mit der Spule LS, die zusammen mit der Diode DS2 eine Schaltung zur Energierückgewinnung bildet.

Da die Schaltungen nach Figur 1 und Figur 2 im Prinzip ähnlich arbeiten, wird die Wirkungsweise gemeinsam beschrieben.

Jeweils am Ende der Hinlaufzeit, also im Zeitpunkt der Abschaltung des Transistors RP, ist CS vollständig entladen. Diese Entladung erfolgt in Figur 1 über den Widerstand RS und in Figur 2 über den Transistor TRS und die Spule LS. In Figur 1 wird die im Kondensator CS enthaltene Energie in Wärme umgesetzt. In Figur 2 gelangt diese Energie in Form eines Stromes in die Spule LS und wird dort gespeichert. Zu Beginn der Rücklaufzeit, also beim Ansteigen der Spannung U2, ist der Kondensator CS über die leitende Diode DS1 der Wicklung 2 unmittelbar parallel geschaltet. CS und DS1 bilden somit einen Stromweg, der in erwünschter Weise die Anstiegszeit der Spannung U2 erhöht und damit die unerwünschte Spitze in der Spannung U2 verringert. Über die Kopplung durch den Transformator Ü ergibt sich eine zusätzliche Verbesserung der Spannungsverhältnisse auf der Primärseite des Transformators Ü. Das auf der Primärseite vcrgesehene Netzwerk CP, DP und RP wird in seiner Wirkung unterstützt und der negative Einfluß der Streuinduktivität herabgesetzt. Die Streuinduktivität verringert an sich jeweils den Strom, der durch die Wicklung verursacht wird. Zu Beginn der Rücklaufzeit wird also in den Schaltungen gemäß Figur 1, 2 der Kondensator CS durch die zu dämpfende Spannungsspitze der Spannung U2 aufgeladen. Damit dieser Vorgang zur Dämpfung der Spannungspitze zu Beginn der Rücklaufzeit jeweils erneut erfolgen kann, ist die Schaltung so bemessen, daß der Kondensator CS jeweils während einer Periode, also von dem Beginn einer Rücklaufzeit bis zum Beginn der nächsten, über den Widerstand RS oder den Transisitor TRS vollständig entladen wird.

Der Transistor TRS kann zusätzlich an seiner Basis durch eine Schaltspannung so gesteuert sein, daß er die beschriebene Entladung des Kondensators CS bewirkt. Es hat sich gezeigt, daß eine solche zusätzliche Taktung in der Praxis nicht erforderlich ist. Der notwendige Schaltvorgang des Transistors TRS wird durch die vorhandenen Spannungen und Ströme selbstständig in ausreichendem Maße ausgelöst. Solange der Kondensator CS noch geladen ist, fließt durch den Transistor TRS ein Strom, der der Spule LS Energie zuführt. Wenn der Kondensator CS entladen ist, hat er keine Spannung mehr gegen Masse, dann wird auch der Transistor TRS stromlos. Am Kollektor von TRS tritt dann eine positive Spannungspitze auf, da die Spule LS die Energie abgibt. Der Strom in LS kehrt sich um. Die Spannung am Kollektor von TRS wird solange positiver, bis die zweite Diode DS2 leitend wird. Jetzt gelangt der Strom aus der Induktivität LS über die leitende Diode DS2 auf den Ladekondensator CSB und trägt damit im Sinne einer Energierückgewinnung zur Ausgangspannung UA bei. Durch diese Schaltung wird also die zunächst im Kondensator CS gespeicherte Energie wieder in die nutzbare Energie zurückgeführt und der Gesamtwirkungsgrad der Schaltung erhöht. Am Ende der Hinlaufzeit ist CS vollständig entladen und kann daher die erwünschte Dämpfung der nächsten Spannungspitze der Spannung U2 in der beschriebenen Weise bewirken. Als Transistor TRS wird vorzugsweise ein schneller Schaltertyp verwendet, um die Verluste gering zu halten.

Vorzugsweise haben die dargestellten Reihenschaltungen auf der Primärseite und auf der Sekundärseite etwa die gleichen Zeitkonstanten. Es können auch zwei aktive Schaltungen gemäß Figur 2 auf der Primär- und Sekundärseite liegen. Die Dämpfungsenergie wird dann auf der Primärseite nutzbringend der Spannung UP und auf der Sekundärseite der Spannung UA im Sinne einer Energierückgewinnung zugeführt.

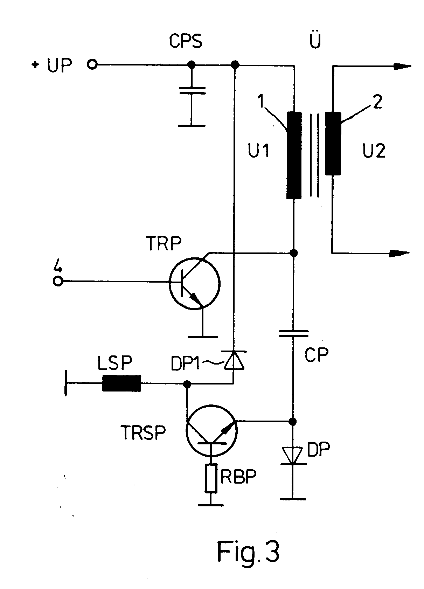

In Figur 3 ist die aktive Schaltung mit Energierückgewinnung gemäß 2 auf der Primärseite des Übertragers Ü vorgesehen. Den Elementen CS, DS1 und TRS in Figur 2 entsprechen in Figur 3 die Bauteile CP, DP, TRSP und den Bauteilen LS und DS2 die Bauteile LSP und DP1. Die Wirkungsweise ist die gleiche. Die Energierückgewinnung erfolgt auf die Primär-Gleichspannung UP.

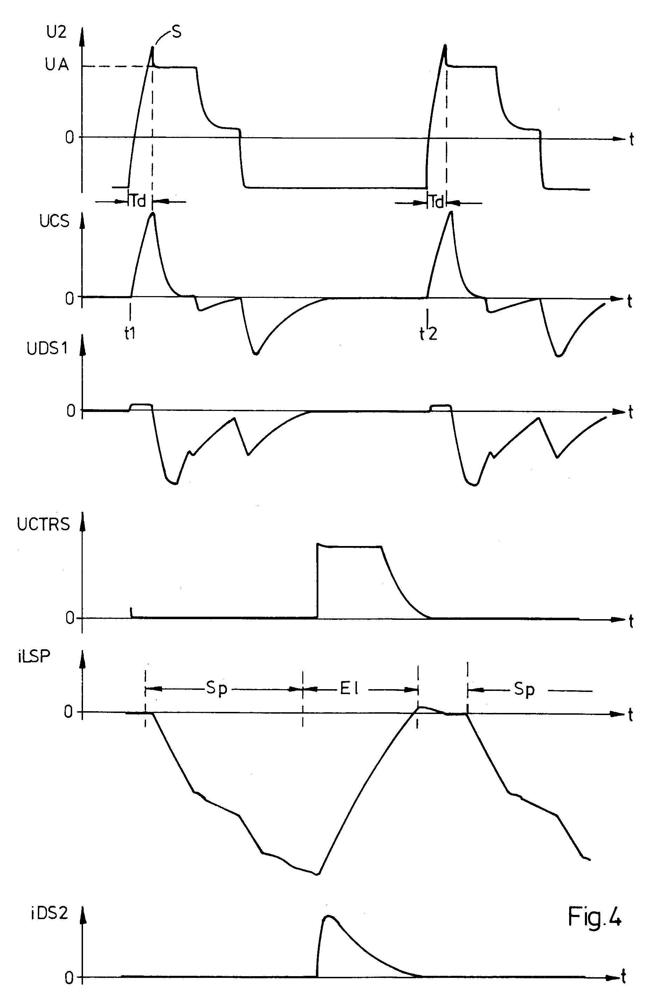

Figur 4 zeigt die in den Schaltungen nach Figur 1 bis 3 auftretenden Spannungen und Ströme. Die störende Spannungsspitze S in der Spannung U2 an der Sekundärwicklung 2 übersteigt die erzeugte Gleichspannung UA nu. geringfügig. Mit Td ist die Zeit bezeichnet, während der die Dämpfung mit der beschriebenen Reihenschaltungen stattfindet. UCS ist die Spannung an dem Kondensator CS. Diese Spannung steigt während der Zeit Td durch den in erwünschter Weise fließenden Belastungsstrom für die Wicklung an und wird anschließend während der Hinlaufzeit durch Entladung über den Widerstand RS oder den Transistor TRS abgebaut. UDS1 ist die Spannung an der Diode DS1 und damit in Figur 2 am Emitter des Transistors TRS. UCTRS ist die Spannung am Kollektor des Transistors TRS. iLSP ist der Strom in der Spule LS in Figur 2. Dabei ist mit Sp die Zeit der Energiespeicherung in der Spule LS und mit El die Zeit der Energieentladung aus der Spule LS bezeichnet. iDS2 ist der Strom durch die Diode DS2. Dieser Strom bewirkt die Energieübertragung von LS in den Ladekondensator CSB in der Schaltung nach Figur 2. Die unter iDS2 dargestellte Kurve gibt daher gleichzeitig den Leistungsgewinn durch die Energierückgewinnung gemäß Figur 2 an.

| | |
|---|---|
| CP: | 6,8 nF |
| CS: | 0,97 µF in Fig. 1, 470 µF in Fig. 2 |
| CSB: | 4×470 µF |
| DG: | Diode vom Typ BYT 13 P 200 |
| DS1 | : Diode vom Typ BYW 98 (Thomson) |
| DS2: | Diode vom Typ BYW 98 (Thomson) |
| LS: | 70 µH |
| RB: | 100 Ohm |
| RL: | 1 Ohm |
| RP: | 330 Ohm |
| RS: | 10 Ohm |
| TRP: | Transistor vom Typ BUD 48 I |
| TRS: | Transistor vom Typ 2 SC 2562 (Toshiba) entspr. BUV 45 von Thomson |
| UP: | + 320 V |
| UA: | + 18 V |
| Wicklung 1: | 38 Windungen |
| Wicklung 2: | 3 Windungen |

**Patentansprüche**

1. Schaltnetzteil mit einem als Schalter arbeitenden Transistor (TRP) und einem Transformator (Ü), an dessen Primärwicklung (1) die Reihenschaltung aus einem Kondensator (CP) und aus der Parallelschaltung einer Diode (DP) und eines Widerstandes (RP) angeschlossen ist, dadurch gekennzeichnet, daß eine zweite derartige Reihenschaltung (CS,DS1,RS) parallel zu einer Sekundärwicklung (2) des Transformators (Ü) geschaltet ist.

2. Netzteil nach Anspruch 1, dadurch gekennzeichnet, daß die Reihenschaltung unmittelbar parallel zu einer eine Betriebsgleichspannung (UA) erzeugenden Sekundärwicklung (2) liegt.

3. Netzteil nach Anspruch 2, dadurch gekennzeichnet, daß die Reihenschaltung parallel zu mehreren Sekundärwicklungen vorgesehen ist.

4. Netzteil nach Anspruch 1, dadurch gekennzeichnet, daß die Reihenschaltung parallel zu der Wicklung des Transformators (Ü) liegt, die die stärkste Kopplung mit der Primärwicklung (1) aufweist.

**5.** Netzteil nach Anspruch 1, dadurch gekennzeichnet, daß der Widerstand (RS) der Reihenschaltung durch einen Transistor (TRS) gebildet ist (Fig.2).

**6.** Netzteil nach Anspruch 5, dadurch gekennzeichnet, daß der durch den Transistor (TRS) fließende Entladestrom des Kondensators (CS) durch eine Energie-Rückgewinnungsschaltung (LS,DS2) zur Erzeugung oder Ergänzung einer Betriebsspannung (UA,UP) ausgenutzt ist (Fig. 2,3).

**7.** Netzteil nach Anspruch 6, dadurch gekennzeichnet, daß parallel zu der Diode (DS1) die Reihenschaltung aus der Kollektor/Emitter-Strecke des Transistors (TRS) und einer Induktivität (LS) liegt (Fig. 2,3).

**8.** Netzteil nach Anspruch 7, dadurch gekennzeichnet, daß die Induktivität (LS) über eine zweite Diode (DS2,DP1)an einen eine Betriebsspannung führenden Ladekondensator (CSB;CPS) angeschlossen ist (Fig. 2,3).

**9.** Netzteil nach Anspruch 7, dadurch gekennzeichnet, daß der Transistor (TRS) an der Basis durch eine zusätzliche Steuerspannung zur Entladung des Kondensators (CS) leitend gesteuert ist.

**10.** Netzteil nach Anspruch 1, dadurch gekennzeichnet, daß die beiden Reihenschaltungen an der Primärwicklung (1) und an der Sekundärwicklung (2) etwa gleiche Zeitkonstanten haben.

**Claims**

**1.** Switched power supply with a transistor (TRP) working as a switch and with a transformer (Ü) to whose primary winding (1) a series circuit consisting of a capacitor (CP) and of the parallel connection of a diode (DP) and a resistor (RP) is connected, characterised in that a second such series circuit (CS, DS1, RS) is connected parallel to a secondary winding (2) of the transformer (Ü).

**2.** Power supply according to claim 1, characterised in that the series circuit lies directly parallel to a secondary winding (2) generating an operating d.c. voltage (UA).

**3.** Power supply according to claim 2, characterised in that the series circuit is provided parallel to a plurality of secondary windings.

**4.** Power supply according to claim 1, characterised in that the series circuit lies parallel to that winding of the transformer (Ü) which exhibits the strongest coupling with the primary winding (1).

**5.** Power supply according to claim 1, characterised in that the resistor (RS) of the series circuit is formed by a transistor (TRS) (Fig. 2).

**6.** Power supply according to claim 5, characterised in that the discharge current of the capacitor (CS) flowing through the transistor (TRS) is utilized by an energy recovery circuit (LS, DS2) to generate or complement an operating voltage (UA, UP) (Figs 2, 3).

**7.** Power supply according to claim 6, characterised in that there lies parallel to the diode (DS1) the series circuit consisting of the collector/emitter path of the transistor (TRS) and an inductor (LS) (Figs 2, 3).

**8.** Power supply according to claim 7, characterised in that the inductor (LS) is connected via a second diode (DS2, DP1) to a charging capacitor (CSB; CPS) carrying an operating voltage (Figs 2, 3).

**9.** Power supply according to claim 7, characterised in that the transistor (TRS) is controlled conductively at the base by an additional control voltage for the discharge of the capacitor (CS).

**10.** Power supply according to claim 1, characterised in that the two series circuits have approximately equal time constants on the primary winding (1) and on the secondary winding (2).

**Revendications**

**1.** Bloc d'alimentation et de commutation avec un transistor (TRP) qui fonctionne comme commutateur et un transformateur (Ü) sur l'enroulement primaire (1) duquel le montage en série d'un condensateur (CP) et du montage en parallèle d'une diode (DP) et d'une résistance (RP) est raccordé, **caractérisé en ce** qu'un second montage en série (CS, DS1, RS) de ce type est monté en parallèle avec l'enroulement secondaire (2) du transformateur (Ü).

**2.** Bloc d'alimentation selon la revendication 1, **caractérisé en ce** que le montage en série se trouve directement en parallèle avec un enroulement secondaire (2) qui produit une tension continue de fonctionnement (UA).

3. Bloc d'alimentation selon la revendication 2, **caractérisé en ce** que le montage en série est prévu en parallèle avec plusieurs enroulements secondaires.

4. Bloc d'alimentation selon la revendication 1, **caractérisé en ce** que le montage en série est en parallèle avec l'enroulement du transformateur (Ü) qui présente le couplage le plus fort avec l'enroulement primaire (1).

5. Bloc d'alimentation selon la revendication 1, **caractérisé en ce** que la résistance (RS) du montage en série est formée par un transistor (TRS) (figure 2).

6. Bloc d'alimentation selon la revendication 5, **caractérisé en ce** que le courant de décharge du condensateur (CS) qui parcourt le transistor (TRS) est utilisé par un circuit de récupération de l'énergie (LS, DS2) pour produire ou compléter une tension de fonctionnement (UA, UP) (figures 2, 3).

7. Bloc d'alimentation selon la revendication 6, **caractérisé en ce** que le montage en série du parcours collecteur/émetteur du transistor (TRS) et d'une inductance (LS) est monté en parallèle avec la diode (DS1) (figures 2, 3).

8. Bloc d'alimentation selon la revendication 7, **caractérisé en ce** que l'inductance (LS) est raccordée par une seconde diode (DS2, DP1) à un condensateur de lissage (CSB ; CPS) qui guide une tension de fonctionnement (figures 2, 3).

9. Bloc d'alimentation selon la revendication 7, **caractérisé en ce** que le transistor (TRS) est commandé en étant conducteur à sa base par une tension de commande supplémentaire pour la décharge du condensateur (CS).

10. Bloc d'alimentation selon la revendication 1, **caractérisé en ce** que les deux montages en série sur l'enroulement primaire (1) et sur l'enroulement secondaire (2) ont à peu près les mêmes constantes de temps.

Fig.1

Fig.2

Fig.3

Fig.4